# EUROPEAN PATENT APPLICATION

(11) **EP 1 211 906 A2**
(43) Date of publication of application: **05.06.2002**
(21) Application number: 01309917.1
(22) Date of filing: 26.11.2001
(51) Int. Cl.: H04Q 7/32

(54) **System and method for dynamic local phone directory**

(30) Priority: 04.12.2000 US 730419
(71) Applicant: International Business Machines Corporation, Armonk, NY 10504 (US)
(72) Inventor: Smith, Newton J., c/o IBM United Kingdom Ltd, Winchester, Hampshire SO21 2JN (GB); Rodriguez, Herman, c/o IBM United Kingdom Ltd, Winchester, Hampshire SO21 2JN (GB); Spinac, Clifford, c/o IBM United Kingdom Ltd, Winchester, Hampshire SO21 2JN (GB)
(74) Representative: Burt, Roger James, Dr.

(57) **Abstract**

A system and method for providing a local telephone directory based on a mobile telephone location is provided. When the mobile telephone moves from one mobile telephone area, such as a cell, to another area, new local telephone information is received from the mobile telephone company. The mobile telephone receives the local telephone information and stores the information in a dynamic directory storage area. The user can enter preferences such as a preferred language, that is used to identify local numbers. Dynamic speed dial keys may also be assigned so that, for example, the local police station is always assigned to the same speed dial key even though the local police station phone number changes as the mobile phone moves from one area to another. The filtering of data can be performed at either the mobile telephone company or on the mobile telephone after receiving the local directory information.

## Description

The present invention relates in general to a method and system for providing a dynamic directory. More particularly, the present invention relates to a system and method for providing a dynamic local phone directory based on a location of a mobile phone.

Mobile telephones are available to perform a wide variety of tasks. Semiconductor technology has enabled mobile telephone devices to better assist people in their daily activities. Mobile telephones, for example, can not only be used to place telephone calls but can also be used to access the Internet, send and receive email, check stock quotes and sports scores, and act as a personal digital assistant (or PDA).

Mobile telephones connect to a telephone network using a wireless connection. Because of their usefulness, users often store frequently used phone numbers in electronic directories within the mobile telephone. Because of their portability, users frequently carry mobile telephones with them throughout their day. In this manner, functions within the mobile telephone are available to the user throughout the day.

Mobile telephones are especially useful while the user is traveling. While traveling, the user has continual access to functions provided by the mobile telephone, including the ability to place calls on the mobile telephone. The user can place telephone calls even though he may be miles away from a traditional wired telephone connected to the public switched telephone network.

Mobile telephone systems use various technologies to provide a wireless connection between the user's mobile telephone and the telephone network. Cellular technology is one technology used in mobile telephone systems. A cell phone is a mobile telephone that connects to a cellular network. A cellular telephone is a duplex device that uses one frequency for talking and a second, separate frequency for listening. A CB radio has 40 channels whereas a cell phone can communicate on 1,664 channels. Cell phones operate within "cells," and they can switch cells as they move around. Cells give cell phones a large range. A walkie-talkie can transmit perhaps a mile. A CB radio, because it has much higher power, can transmit perhaps five miles. Someone using a cell phone, on the other hand, can drive across a city and maintain a conversation the entire time. AMPS (Advanced Mobile Phone System) is the cell phone standard.

Cellular systems divide regions, such as a city, into small cells. This allows extensive frequency reuse across a city so that millions of people can use cell phones simultaneously. The carrier divides an area (such as a city) into cells. Each cell is typically sized at about 10 square miles (perhaps 3 mi x 3 mi).

The power consumption of the cell phone, which is normally battery-operated, is relatively low. Low power allows cell phones to use small batteries, thus increasing the portability of the phones.

The transmissions of a base station and the phones within its cell do not radiate very far outside the cell. Therefore, the same frequencies can be used in other cells, so that frequencies can be reused extensively across the city.

The cellular approach requires a large number of base stations in a city of any size. A typical large city can have hundreds of towers. Because so many people are using cell phones, costs remain fairly low per user. Each carrier in each city also runs one central office called the MTSO (Mobile Telephone Switching Office). This office handles all of the phone connections to the normal land-based phone system and controls all of the base stations in the region.

When a call is placed to a cell phone, the MTSO gets the call, and it tries to find the cell phone. In early (pre-roaming) systems the MTSO found the receiver by paging the phone (using one of the control channels, to which the phone is always listening) in each cell of the region until the phone responded. It then notified both the receiving phone and the base station in the cell which of the channels in the cell the phone should use. At that point the receiving phone was connected to the base station, and a conversation could commence between the caller and receiver.

As a cell phone user moves toward the edge of a cell, the cell's base station notes that the signal strength from the cell phone is diminishing. Meanwhile, the base station in the cell the user is moving toward (which is listening and measuring signal strength on all frequencies) determines that the phone's signal strength is increasing. The two base stations are coordinated through the MTSO, and at some point the cell phone gets a signal on a control channel telling it to change frequencies. This handoff switches the phone to the new cell.

Roaming alters the way phones work in a cellular system. In modern systems, cell phones listen for a System ID (SID) on the control channel at power-up. If the SID on the control channel does not match the SID programmed into the phone, then the phone determines that it is "roaming." Roaming means that the phone is not operating in the phone's local network and therefore is operating, either in analog or digital mode, in another local network. Local networks can be divided on a geographic basis and can also be divided based on different companies providing the service. The phone also transmits a registration request, and the network keeps track of the phone's location in a database (in this way, the MTSO identifies which cell the phone is in so that the phone can be contacted). As the phone moves between cells, the phone detects changes in the control channel's strength and re-registers itself with the new cell when it changes channels. If the phone cannot find any control channels to listen to, it knows it is out of range and displays a "no service" message.

Cellular phones can also operate using digital technology. Digital cell phones use the same radio technology (in different frequency bands for example, PCS phones use frequencies between 1.85 and 1.99 gigahertz) but convert voice into digital 1s and 0s and then compress it. This compression allows between 3 and 10 cell phone calls to occupy the space of a single analog voice call. An analog channel is FM and is 30 kHz wide in order to provide acceptable voice quality). A digital channel (in TDMA - Time Division Multiple Access) is 30 kHz wide but is split time-wise into three time slots. Each conversation gets the radio for one-third of the time. Therefore, a digital channel has three times the capacity of an analog channel. Modulation and encoding schemes are used to do this and to maintain acceptable voice quality. Because of this, digital cell phones contain increased processing power. Analog signals, in comparison, cannot be compressed and manipulated as easily as a true digital signal.

PCS (Personal Communications Services) is a wireless phone service very similar to cellular phone service with an emphasis on personal service and extended mobility. The term "PCS" is also sometimes used in place of digital cellular, but true PCS means that other services like paging, caller ID and e-mail are bundled into the service. PCS has smaller cells and therefore requires a larger number of antennas to cover a geographic area.

Cellular systems in the United States operate in the 824-849 megahertz (MHz) frequency bands; PCS operates in the 1850-1990 MHz bands. Digital (TDMA) has 30 kHz channel spacing and three time slots. PCS has 200 kHz channel spacing and eight time slots.

Several technologies are used for PCS in the United States, including Cellular Digital Packet Data (CDPD) and Global System for Mobile (GSM) communication. GSM is more commonly used in Europe and outside the United States.

TDMA is a technology used in digital cellular telephone communication to divide each cellular channel into three time slots in order to increase the amount of data that can be carried. TDMA is used by Digital-American Mobile Phone Service (D-AMPS), Global System for Mobile communications (GSM), and Personal Digital Cellular (PDC). However, each of these systems implements TDMA in a somewhat different and incompatible way.

TDMA was first specified as a standard in EIA/TIA Interim Standard 54 (IS-54). IS-136, an evolved version of IS-54, is the U.S. standard for TDMA for both the cellular (850 MHz) and PCS (1.9 GHz) spectrums. TDMA is also used for Digital Enhanced Cordless Telecommunications (DECT).

CDMA (Code Division Multiple Access), one of the three wireless telephone transmission technologies, takes an entirely different approach from GSM and the similar TDMA. CDMA, after digitizing data, spreads it out over the entire bandwidth it has available. Multiple calls are overlaid over each other on the channel, with each assigned a unique sequence code.

TDMA uses narrow band signals, divided into different time slots - a certain number of users per a certain amount of spectrum. Narrow band means channelization in the traditional sense; for example, every 30 kHz is another channel. CDMA is a form of spread spectrum. All users transmit in the same wide-band spectrum space. Each user's signal is spread over the entire bandwidth by a unique spreading code. At the receiver, that same unique code is used to recover the signal. Ideally, TDMA and CDMA are transparent to each other.

Their mobility makes mobile telephones an important piece of emergency equipment. If the user experiences mechanical problems with his automobile, health problems, or needs to contact police or fire departments, he can use his mobile telephone to contact help. The user may store the phone numbers for police, fire, hospitals, and auto service in the phone directory within the mobile telephone.

Phone number information traditionally stored by the user is static. When the user is traveling, the static numbers stored in his telephone likely do not correspond with the local police, fire, hospital, and auto service for the travel location.

Accordingly, the invention provides a method of providing dynamic telephone directories to a mobile telephone, said method comprising: identifying that the mobile telephone is in a mobile telephone area for which dynamic telephone data is not stored; receiving one or more local telephone numbers corresponding to the mobile telephone area; and storing the local telephone numbers in the mobile telephone.

The invention preferably provides a dynamic local phone directory to the user that changes when the user changes locations.

It has been discovered that a dynamic local phone directory can be provided to a mobile telephone. As the telephone moves from one area to another, dynamic directory information is preferably sent from the telephone company to the mobile telephone. Emergency contact information, such as local police, fire, hospital, and auto service, can be downloaded to the telephone and stored in a dynamic directory. When the telephone moves to another mobile telephone area (such as another cell), different local contact information is preferably automatically downloaded to the mobile telephone.

Preferably, the user provides preferences regarding the dynamic local information he is interested in (e.g. these are stored in the phone).

In one embodiment, the phone company provides a data packet of all local directory information available in the local area. The mobile telephone unit receives the information and filters the information based on the user's preferences. In another embodiment, the mobile telephone provides the phone company with the user's preferences and the phone company responds by sending matching information to the user's mobile telephone.

By way of example, the user can indicate a language preference so that if different phone numbers are provided for different languages, the preferred phone number is delivered to the user. In addition, the user can indicate other factors, such as his insurance company or HMO, so that organizations matching the preferences are provided to the user before organizations that do not match the preferences.

In a preferred embodiment, the mobile telephone also includes speed dial keys that are assigned to frequently used telephone numbers. Dynamic speed dial keys are used to assign dynamic telephone numbers, such as the police phone number, to a user preferred key. For example, if the user selected that speed dial key "2" should be assigned to "police," then the "2" dynamic speed dial key would always correspond with the local police phone number. Dynamic speed dial keys can be maintained and stored along with static speed dial keys.

Preferably the local telephone numbers are displayed on a display area included in the mobile telephone each of the local telephone numbers includes a description and the description corresponding with each local telephone number is displayed on the display area.

In a preferred embodiment, a prior set of local telephone numbers is removed from a dynamic phone directory included in the mobile telephone, and current local telephone numbers are then stored in the dynamic phone directory.

In a preferred embodiment, the receiving and storing of numbers is performed in response to powering on the mobile telephone.

Preferably, a computer program for providing dynamic telephone directories to a mobile telephone is also provided which comprises program code adapted to provide the functionality described above when the computer program is executed.

According to a further aspect, the invention provides a mobile telephone comprising: one or more processors; a memory accessible by the processors; a wireless interface for communicating with a mobile telephone network; a nonvolatile storage device accessible by the processors; and a dynamic directory tool, the dynamic directory tool including: means for identifying when the mobile telephone is in a mobile telephone area for which dynamic telephone data is not stored; means for receiving one or more local telephone numbers corresponding to the mobile telephone area; and means for storing the local telephone numbers in the mobile telephone.

According to a yet further aspect, the invention provides a method of providing dynamic telephone directories to a mobile telephone, comprising: receiving a request for dynamic telephone data from a mobile phone; looking up said data; returning said data to the requesting mobile phone.

In one embodiment, user preferences are received from the mobile phone defining the desired dynamic data and prior to returning the data to the mobile phone, the looked up date is filtered using the provided user preferences.

Embodiments of the present invention will now be described by way of example only and with reference to the following drawings:
**Figure 1** is a block diagram of a mobile telephone using dynamic directories in accordance with a preferred embodiment of the present invention;
**Figure 2** is an external diagram of a mobile telephone using dynamic directories in accordance with a preferred embodiment of the present invention;
**Figure 3** is a diagram showing a user moving between mobile telephone areas and corresponding dynamic directory information being provided to the mobile telephone in accordance with a preferred embodiment of the present invention;
**Figure 4** is a flowchart of dynamic directory information being downloaded to a mobile telephone and filtered within the mobile telephone in accordance with one preferred embodiment of the present invention;
**Figure 5** is a flowchart of preferred dynamic directory information being downloaded to a mobile telephone in response to the mobile telephone sending preference information to the phone company in accordance with a preferred embodiment of the present invention; and
**Figure 6** is a block diagram of an information handling system capable of implementing a preferred embodiment of the present invention.

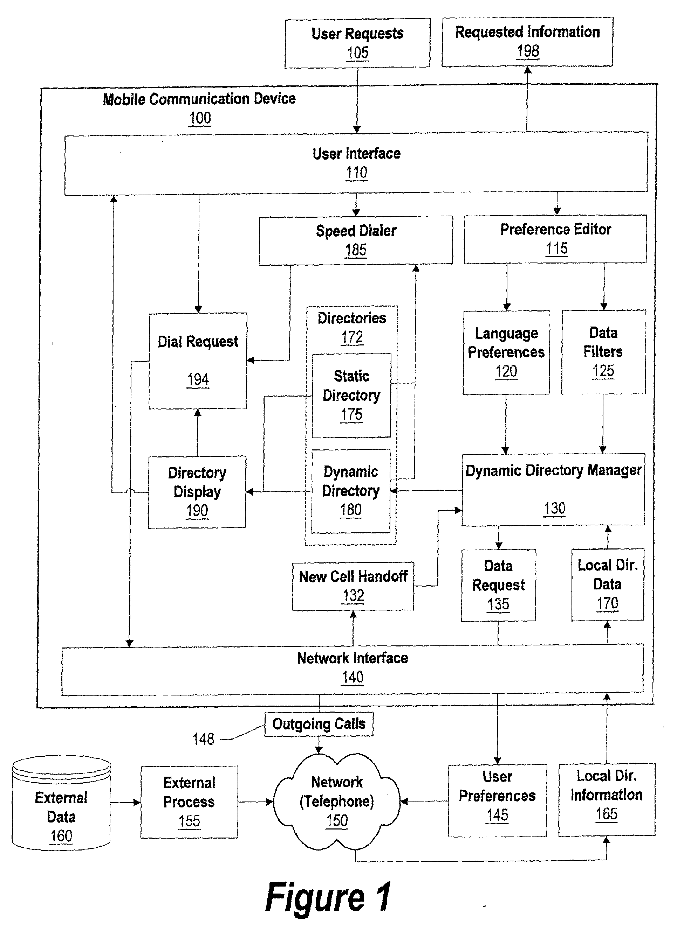

**Figure 1** shows a block diagram of a mobile telephone using dynamic directories in accordance with a preferred embodiment of the present invention. Mobile communications device **100,** such as a mobile or cellular telephone, includes components and functions for providing dynamic directory information to the user. User requests **105** are received from the user by user interface **110.** User interface **110** can include key entry, selections using a selection device (such as a thumb wheel), and voice recognition software for recognizing user requests **105** in the form of voice commands. Preference editor **115** is used to add, modify, and delete user preferences such as language preferences **120** and data filters **125.** Language preferences **120** is used to store languages in which the user is fluent or understands. This information is used to select local phone directory numbers that correspond (if possible) with the user's language preference. If the user speaks Spanish but not English, language preference **120** would so indicate in order to connect the user with a Spanish speaking number if available. Data filters **125** are used to store additional information about user preferences. For example, if a user is a member of a particular HMO or is covered by a particular form of insurance, data filters **125** can capture the information for matching the user with appropriate services. In the insurance example, the phone number of hospitals that accept the user's insurance may be preferred over hospitals that do not accept the insurance. In addition, travel services, such as AAA, often affiliate with local auto service companies. If the user is a member of the travel service, he may prefer to identify and download those auto service companies that are affiliated with the travel service. Another example may be a user that has a particular medication need. He may wish to identify pharmacies that carry the needed medication. Dynamic directory manager **130** manages dynamic directory **180.** When the user enters a new mobile telephone area, or cell, new cell handoff **132** receives control information from the new cell. New cell handoff **132** signals dynamic directory manager **130** to initiate updating dynamic directory **180.** Dynamic directory manager **130** prepares data request **135.** In one embodiment, data request **135** includes preference information **145** so that the telephone company responds with area data matching the user's preferences. In another embodiment, the telephone company provides all available telephone directory information and dynamic directory manager **130** filters the incoming data using language preferences **120** and data filters **125** to prepare dynamic directory **180.**

Mobile telephone network **150** receives data request **135.** External process **155** is performed at the Mobile Telephone Switching Office (MTSO), mobile telephone base station, or other telephone network location. External process **155** provides local telephone directory information based on the location of mobile communication device **100.** The location of mobile communication device **100** is determined by identifying which base station is communicating with the device. In a cellular environment, this determination may be made by the MTSO coordinating the handoff between base stations. External process **155** reads external data **160** that includes local phone directory information. External data **160** may also include other information, such as the language spoken and preference matching information, such as which medical insurance a particular hospital accepts and which travel services are affiliated with a particular auto service company. External process **155** looks up requested local directory information and passes the data back through mobile telephone network **150.** Local directory information **165** is received by network interface **140** operating within mobile communication device **100.** Network interface **140** identifies the received information as local directory data **170** based on a control channel used for the communication or based upon a header or other control information included with the transmission. Area data **170** is received by dynamic directory manager **130** which processes the data and stores the filtered data in dynamic directory **180.** Dynamic directory **180** and static directory **175** are included in directories **172.** Directories **172** are stored within mobile communication device **100.** Static directory **175** stores static phone numbers and other information the user enters. For example, the user may wish to store his home telephone number within static directory **175.**

When the user wishes to use either static directory **175** or dynamic directory **180,** he uses user interface **110** to access the information. Speed dialer **185** maps key combinations to phone numbers stored within static directory **175** and dynamic directory **180.** For example, the user may have a speed dial set so that when he enters "#" followed by a "1" his home phone is called. In addition, dynamic directory numbers can be mapped. For example, when the user enters "#" followed by a "2" he may be connected with the local police department that is stored in dynamic directory **180.** In one embodiment, a key is provided to access either static directory speed dials or dynamic directory speed dials. The user can also access directory information by using user interface **110** to show directory display **190.** Directory display **190** can show either static directory **175,** dynamic directory **180,** or a combination of directory information.

When the user wishes to place a call, he uses user interface **110** to access dial request **194.** Dial request **194** can receive phone numbers to dial from the user as entered on the keypad, from speed dialer **185** (which dials either a static or dynamic directory phone number), or as selected by the user from directory display **190.** Dial request **194** sends the requested phone number to mobile telephone network **150** through network interface **140.** Requested information **198** is returned to the user in the form of a connected phone call or display information showing the user directory information or preference information.

In addition, if the user wishes to retain one or more entries from dynamic directory **180,** he can move the desired entries to static directory **175**. For example, when the user moves to a new area, he may wish to freeze the local directory information in his mobile telephone so that the information is not lost when he travels away from his new home.

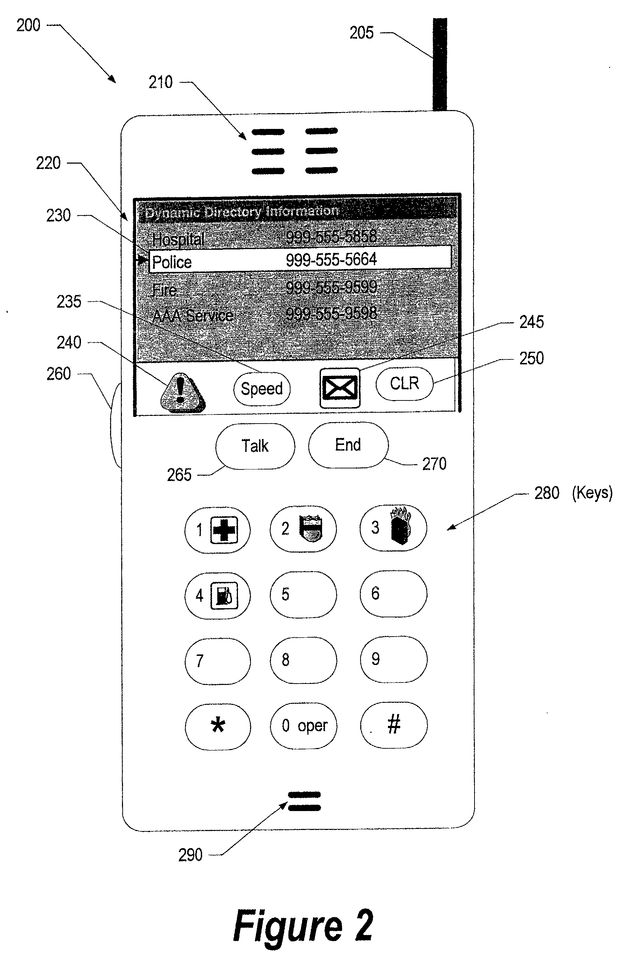

**Figure 2** shows an external diagram of a mobile telephone using dynamic directories in accordance with a preferred embodiment of the present invention. Mobile telephone **200** includes antenna **205** used to send and receive wireless signals to and from a mobile telephone network. Mobile telephone **200** also includes speaker **210** used to produce audible sounds received from a phone connection and microphone **290** used to receive the user's voice for voice commands and transmission to the mobile telephone network.

Mobile telephone **200** also includes display screen **220** used to display information to the user. In the example shown, dynamic directory information is shown in display screen **220.** In the example shown, the dynamic directory information includes the hospital, police, fire department, and AAA auto service. Each of the dynamic directory items include a local telephone number used to connect to the corresponding dynamic entity. The user can use a selecting device, such as thumb selector **260,** to scroll through and select a particular dynamic directory entry. In the example shown, local police phone number **230** has been selected.

Control buttons are used to perform certain mobile telephone functions. Speed dial button **235** is used in conjunction with one or more keypad numbers **280** to connect to a static directory speed dial number. For example, if the user programmed his home phone number to be speed dial "1" he would press speed dial button **235** followed by the "1" key followed by talk button **265.** Emergency speed dial button **240** is used in conjunction with one or more keypad numbers to connect to a dynamic directory speed dial number. For example, if the user programmed that local hospital service be emergency speed dial "1" he would press emergency speed dial button **240** followed by the "1" key. In some embodiments, emergency speed dial numbers are automatically dialed in response to emergency speed dial button **240** and a single digit pressed from the keypad. In another embodiment, the user presses talk button **265** after pressing emergency speed dial button **240** and one or more digits. When contacting numbers through either speed dial **235** or emergency speed dial **240,** display **220** displays the name of the person or organization being contacted (e.g., "Mercy Hospital") along with the phone number being dialed. In this way, the user can make certain that the correct phone number is being dialed. Voice mail button **245** is used to access voice mail provided by the mobile telephone company to retrieve messages for calls that the user did not answer or receive. Clear command button **250** is used to clear any number or menu entered or selected by the user in display area **220.** Talk button **265** is used to connect to phone numbers entered or selected by the user in display area **220** or selected by the user using a speed dial function. End button **270** is used to terminate, or hang up, when a phone conversation is over. Thumb selector **260** is used to select among menu items or phone numbers displayed on display screen **220.** In some embodiments, thumb selector **260** is rotated to scroll through selections and pressed to make a selection. Numeric keys **280** are used to enter phone numbers. In the example shown, labels have been applied to certain keys to indicate dynamic speed dial functions. Dynamic speed dial key "1" corresponds to a local hospital, dynamic speed dial key "2" corresponds to the local police, dynamic speed dial key "3" corresponds to the local fire department, and dynamic speed dial key "4" corresponds to a local auto service company.

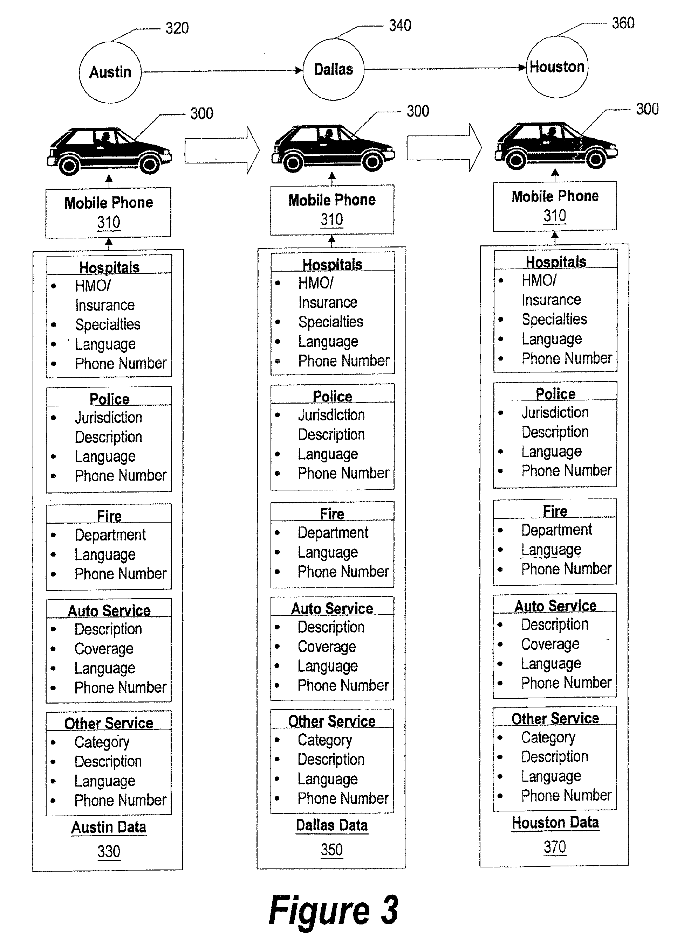

**Figure 3** shows a diagram of a user moving between mobile telephone areas and corresponding dynamic directory information being provided to the mobile telephone in accordance with a preferred embodiment of the present invention. User **300** is traveling between various cities in Texas. When the user is in Austin area **320,** mobile telephone **310** contacts the mobile telephone company and receives Austin data **330** that includes Austin local directory information. Likewise, when user **300** travels to Dallas area **340,** mobile telephone **310** contacts the mobile telephone company and receives Dallas data **350** that includes Dallas local directory information. Likewise, when user **300** travels to Houston area **360,** mobile telephone **310** receives Houston data **370** from the mobile telephone company. In some implementations, such as a cellular network, the user may pass through several base stations and receive local directory information when a handoff is made between one base station and the next. The actual downloaded data may or may not change based upon the services provided in the newly entered cell.

The local directory information received at each location is both dynamic and flexible based upon the user's preferences and the services available in a given area. In the example of local directory information shown, hospital information includes information about the HMOs or insurance accepted by the hospital. Hospital information also includes a language for each phone number provided for the hospital. If the user prefers Spanish, the hospital phone number with a Spanish language option will be selected before a phone number without Spanish. Other information, such as specialties provided by the hospital, can also be included with hospital information. If a user has a heart condition he may wish to be connected with a hospital with a cardiac unit or specialty. Finally, one or more phone numbers for the hospital are provided.

In the police example, information may include the jurisdiction description - for example whether the number is for a county sheriff or a city police department. Police information also includes a language for each phone number provided for the police station. Other information, such as whether the phone number is for emergency or non-emergency calls can also be provided. Finally, one or more phone numbers for the local police department are provided.

In the fire department example, information may include the fire department - for example, the name or number of the fire station. Fire department information also preferably includes a language for each phone number provided for the fire department. Other information, such as whether the phone number is for emergency or non-emergency calls can also be provided. Finally, one or more phone numbers for the local fire department are provided.

In the auto service example, information may include the description of the auto service - for example, the name and address of the auto service company. A coverage option is also preferably included for any travel service affiliations, such as AAA, with which the auto service company is affiliated. If the user is a member of AAA and has entered this preference in mobile phone **310,** then those auto service companies affiliated with AAA are preferably selected before other service companies. Service company information also includes a language for each phone number provided for the service company. Finally, one or more phone numbers for the local auto service company are provided.

The "other service" category is used for any other local directory information that the user has requested. For example, if the user has a need for a certain type of medicine then local pharmacies providing the medication can be provided in the dynamic directory information. In addition, if the user is a member of a national club or organization, such as a health club, the mobile telephone can be instructed to download the name, address, and telephone number of any local clubs or offices. The category information can be used to select "pharmacies" or "health clubs" or other available categories. The description can be used to match a particular name or a pharmacy or health club or for other matching information such as the name of a particular type of medication. Downloaded information also includes a language for each phone number provided for the local service. Finally, one or more phone numbers for the local service are provided.

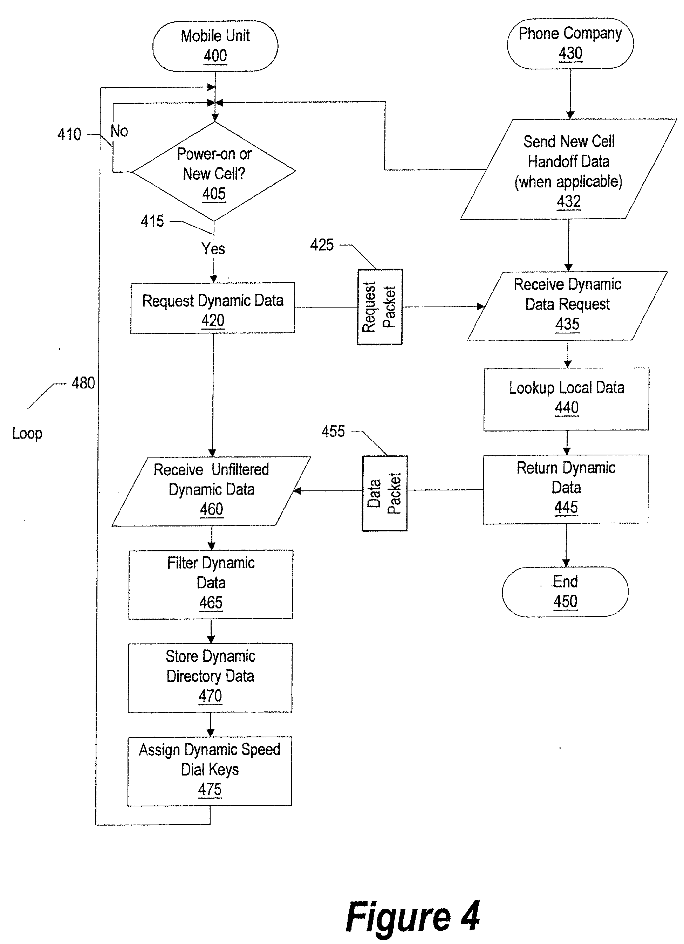

**Figure 4** shows a flowchart of dynamic directory information being downloaded to a mobile telephone and filtered within the mobile telephone in accordance with one embodiment of the present invention. Mobile unit processing commences at **400** whereupon it checks whether the phone has been powered on or has entered a new cell (decision **405**). If the phone has not powered on or entered a new cell, decision **405** branches to "no" branch **410** which loops until the phone enters a new cell. If the phone has just been turned on or entered a new cell, decision **405** branches to "yes" branch **415** whereupon a request is made to the mobile telephone network for dynamic directory data (step **420**). Wireless request packet **425** is sent to the mobile telephone network. Phone company processing commences at **430.** Whenever the user's mobile telephone enters a new cell, a handoff procedure takes place within the mobile telephone network to connect the user's mobile telephone with the appropriate base station. Whenever this handoff occurs, a signal is sent from the mobile telephone company to the mobile telephone (output **432**). Phone company processing receives the dynamic data request from the user's mobile telephone (input **435**). The mobile telephone company retrieves local area information for the area which the user has entered (step **440**) and returns the dynamic data to the user (step **445**). Mobile phone company processing ends at end **450.**

Wireless data packet **455** contains the dynamic data retrieved in step **440.** Mobile telephone receives wireless data packet **455** (input **460**). Wireless data packet **455** contains all available local information including data such as language information, descriptions, and the like. The mobile telephone filters this information using the preferences entered by the user (step **465**). The filtered data is then stored in the dynamic directory storage area (step **470**) and dynamic speed dial keys are assigned to dynamic directory information as preferred by the user (step **475**). Dynamic directory data is now accessible to the user through speed dial keys or the mobile telephone display. Processing then loops back (loop **480**) to wait until the mobile phone enters a new cell.

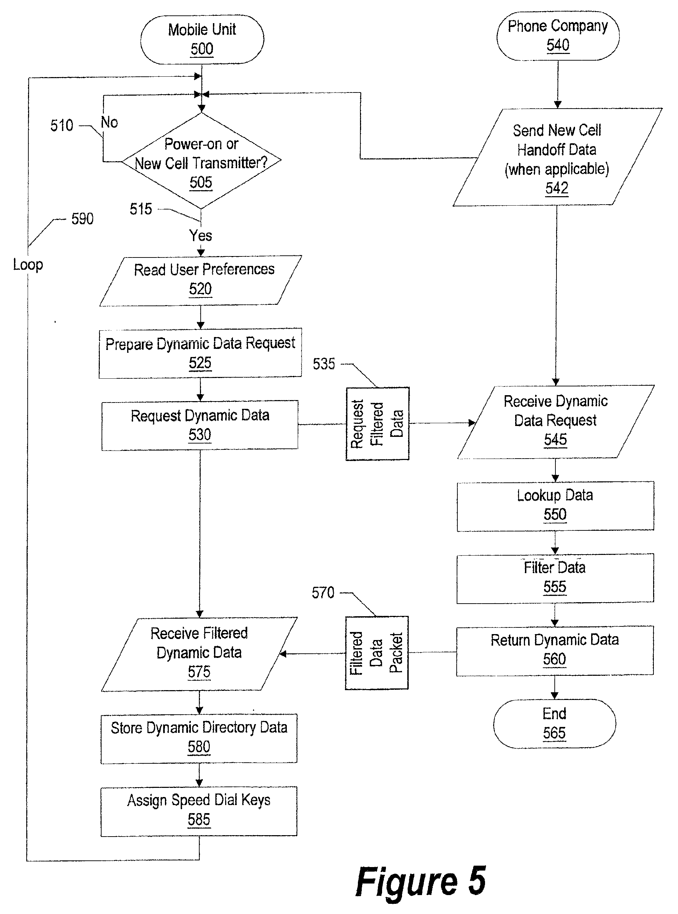

**Figure 5** shows a flowchart of preferred dynamic directory information being downloaded to a mobile telephone in response to the mobile telephone sending preference information to the phone company along with the dynamic data request and in accordance with a preferred embodiment of the present invention. Mobile unit processing commences at **500** whereupon it checks whether the phone has been powered on or has entered a new cell (decision **505**). If the phone has not powered on or entered a new cell, decision **505** branches to "no" branch **510** which loops until the phone enters a new cell. If the phone has just been turned on or entered a new cell, decision **505** branches to "yes" branch **515** whereupon the user's dynamic directory preferences are read (input **520**). A dynamic data request is prepared using the user's preferences (step **525**). The dynamic data request is then sent to the mobile telephone company (step **530**). Wireless request for filtered data packet **535** is transmitted to the mobile telephone company network.

Mobile telephone company processing commences at **540.** Whenever the user's mobile telephone enters a new cell, a handoff procedure takes place within the mobile telephone network to connect the user's mobile telephone with the appropriate base station. Whenever this handoff occurs, a signal is sent from the mobile telephone company to the mobile telephone (output **542**). Phone company processing continues whereupon the user's request for dynamic data is received (input **545**). The data requested by the user is retrieved (step **550**) and filtered (step **555**) using the filtering parameters provided by the user. The filtered data is then returned to the user over the mobile telephone network (step **560**). Mobile telephone company processing ends at end **565.** Because the filtering is performed by the mobile telephone network, the resulting filtered data packet **570** should be smaller than a corresponding data packet where the mobile telephone filters the data (see **Figure 4**).

The mobile telephone receives the filtered dynamic data (input **575**) and stores the data in the dynamic directory storage area (step **580**). Dynamic speed dial keys are assigned to dynamic directory information as preferred by the user (step **585**). Dynamic directory data is now accessible to the user through speed dial keys or the mobile telephone display. Processing then loops back (loop **590**) to wait until the mobile phone enters a new cell.

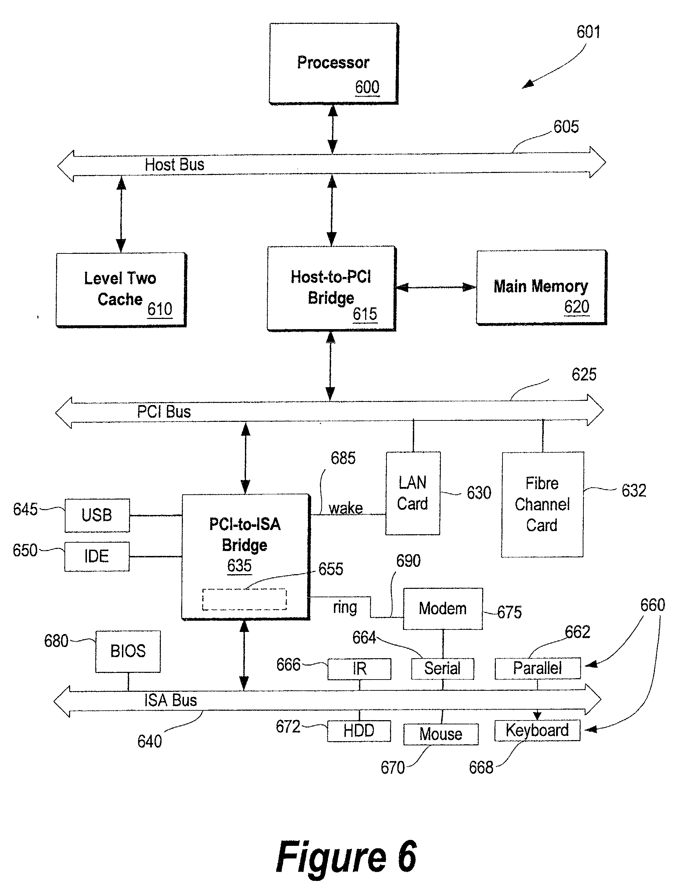

**Figure 6** illustrates information handling system **601** which is a simplified example of a computer system capable of performing the mobile telephone company operations in accordance with a preferred embodiment of the present invention. Computer system **601** includes processor **600** which is coupled to host bus **605.** A level two (L2) cache memory **610** is also coupled to the host bus **605.** Host-to-PCI bridge **615** is coupled to main memory **620,** includes cache memory and main memory control functions, and provides bus control to handle transfers among PCI bus **625,** processor **600,** L2 cache **610,** main memory **620,** and host bus **605.** PCI bus **625** provides an interface for a variety of devices including, for example, LAN card **630** and Fibre Channel card **632.** PCI-to-ISA bridge **635** provides bus control to handle transfers between PCI bus **625** and ISA bus **640,** universal serial bus (USB) functionality **645,** IDE device functionality **650,** power management functionality **655,** and can include other functional elements not shown, such as a real-time clock (RTC), DMA control, interrupt support, and system management bus support. Peripheral devices and input/output (I/O) devices can be attached to various interfaces **660** (e.g., parallel interface **662,** serial interface **664,** infrared (IR) interface **666,** keyboard interface **668,** mouse interface **670,** and fixed disk (HDD) **672**) coupled to ISA bus **640.** Alternatively, many I/O devices can be accommodated by a super I/O controller (not shown) attached to ISA bus **640.**

BIOS **680** is coupled to ISA bus **640,** and incorporates the necessary processor executable code for a variety of low-level system functions and system boot functions. BIOS **680** can be stored in any computer readable medium, including magnetic storage media, optical storage media, flash memory, random access memory, read only memory, and communications media conveying signals encoding the instructions (e.g., signals from a network). In order to attach computer system **601** to another computer system to copy files over a network, LAN card **630** is coupled to PCI bus **625** and to PCI-to-ISA bridge **635.** Similarly, to connect computer system **601** to an ISP to connect to the Internet using a telephone line connection, modem **675** is connected to serial port **664** and PCI-to-ISA Bridge **635.**

While the computer system described in **Figure 6** is capable of executing the invention described herein, this computer system is simply one example of a computer system. Those skilled in the art will appreciate that many other computer system designs are capable of performing the invention described herein.

One of the preferred implementations of the invention is an application, namely, a set of instructions (program code) in a code module which may, for example, be resident in the random access memory of the computer. Until required by the computer, the set of instructions may be stored in another computer memory, for example, on a hard disk drive, or in removable storage such as an optical disk (for eventual use in a CD ROM) or floppy disk (for eventual use in a floppy disk drive), or downloaded via the Internet or other computer network. Thus, the present invention may be implemented as a computer program for use in a computer. In addition, although the various methods described are conveniently implemented in a general purpose computer selectively activated or reconfigured by software, one of ordinary skill in the art would also recognize that such methods may be carried out in hardware, in firmware, or in more specialized apparatus constructed to perform the required method steps.

Finally, to summarize disclosed is a method of providing dynamic telephone directories to a mobile telephone. The method comprises identifying when the mobile telephone enters a mobile telephone area; receiving one or more local telephone numbers corresponding to the mobile telephone area; and storing the local telephone numbers in the mobile telephone.

Further disclosed is a mobile telephone comprising: one or more processors; a memory accessible by the processors; a wireless interface for communicating with a mobile telephone network; a nonvolatile storage device accessible by the processors; and a dynamic directory tool. The dynamic directory tool includes: means for identifying when the mobile telephone enters a mobile telephone area; means for receiving one or more local telephone numbers corresponding to the mobile telephone area; and means for storing the local telephone numbers in the mobile telephone.

Further disclosed is a computer program for providing dynamic telephone directories to a mobile telephone. The computer program comprises: means for identifying when the mobile telephone enters a mobile telephone area; means for receiving one or more local telephone numbers corresponding to the mobile telephone area; and means for storing the local telephone numbers in the mobile telephone.

## Claims

1. A method of providing dynamic telephone directories to a mobile telephone (200), said method comprising:
identifying that the mobile telephone is in a mobile telephone area (405; 505) for which dynamic telephone data is not stored;
receiving one or more local telephone numbers corresponding to the mobile telephone area (460; 575); and
storing the local telephone numbers in the mobile telephone (470; 580).

2. The method as described in claim 1 further comprising:
filtering the local telephone numbers, the filtering based upon one or more user preferences stored in the mobile telephone, wherein the filtering is performed at the mobile telephone (465).

3. The method as described in claim 1 further comprising:
filtering the local telephone numbers, the filtering based upon one or more user preferences stored in the mobile telephone, wherein the filtering is performed at a telephone company computer (555).

4. The method as described in claim 2 or 3 wherein the user preferences include a language preference.

5. The method as described in any preceding claim further comprising:
displaying the local telephone numbers on a display area (220) included in the mobile telephone.

6. The method as described in claim 5 wherein each of the local telephone numbers includes a description, the method further comprising:
displaying the description corresponding with each local telephone number on the display area.

7. The method as described in any preceding claim further comprising:
removing a prior set of local telephone numbers from a dynamic phone directory included in the mobile telephone;
wherein the storing further includes:
storing the local telephone numbers in the dynamic phone directory.

8. The method as described in any preceding wherein the receiving and storing are performed in response to powering on the mobile telephone.

9. The method as described in any preceding claim further comprising:
assigning one or more dynamic speed dial keys to the local telephone numbers (475; 485).

10. A mobile telephone comprising:
one or more processors;
a memory accessible by the processors;
a wireless interface for communicating with a mobile telephone network;
a nonvolatile storage device accessible by the processors; and
a dynamic directory tool, the dynamic directory tool including:
means for identifying when the mobile telephone is in a mobile telephone area for which dynamic telephone data is not stored;
means for receiving one or more local telephone numbers corresponding to the mobile telephone area; and
means for storing the local telephone numbers in the mobile telephone.

11. A computer program for providing dynamic telephone directories to a mobile telephone, said computer program comprising program code adapted to perform the method of any of claims 1 to 9 when said program is executed.

12. A method of providing dynamic telephone directories to a mobile telephone, comprising:
receiving a request for dynamic telephone data from a mobile phone;
looking up said data;
returning said data to the requesting mobile phone.

13. The method of claim 12 comprising receiving user preferences from the mobile phone defining the desired dynamic data; and
prior to the step of returning the data to the mobile phone, filtering the looked up data using said provided user preferences.
